# EUROPÄISCHE PATENTSCHRIFT

(11) **EP 3 504 841 B1**
(45) Veröffentlichungstag und Bekanntmachung des Hinweises auf die Patenterteilung: **09.09.2020**
(21) Anmeldenummer: 17736917.0
(22) Anmeldetag: 03.07.2017
(51) Int. Cl.: H04L 12/12

(54) **TEILNEHMER FÜR EIN DIGITALES KOMMUNIKATIONSSYSTEM UND ZUGEHÖRIGES KOMMUNIKATIONSSYSTEM**
PARTICIPANT IN A DIGITAL COMMUNICATION SYSTEM, AND CORRESPONDING COMMUNICATION SYSTEM
ABONNÉ À UN SYSTÈME DE COMMUNICATION NUMÉRIQUE ET SYSTÈME DE COMMUNICATION ASSOCIÉ

(30) Priorität: 26.08.2016 DE 102016216066
(43) Veröffentlichungstag der Anmeldung: 03.07.2019
(73) Patentinhaber: Robert Bosch GmbH, 70442 Stuttgart (DE)
(72) Erfinder: WEISS, Timo, 71282 Hemmingen (DE); HAENLE, Andreas, 72379 Hechingen (DE); SCHUELER, Jochen, 72144 Dusslingen (DE)
(86) Internationale Anmeldenummer: PCT/EP2017/066458
(87) Internationale Veröffentlichungsnummer: WO 2018/036694

(56) Entgegenhaltungen:
- EP-A2- 2 230 135
- DE-A1-102010 049 835
- DE-A1-102014 208 257
- US-A1- 2003 231 049

## Beschreibung

### Stand der Technik

Die vorliegende Erfindung betrifft einen oder mehrere Teilnehmer für ein digitales Kommunikationssystem sowie ein zugehöriges Kommunikationssystem.

Aktuelle Kommunikationssysteme, wie beispielsweise CAN-Bus basierte Systeme, besitzen eine Hauptenergiequelle, die sämtliche Verbraucher und somit alle Busteilnehmer speist. Damit der Energieverbrauch des Kommunikationssystems im ausgeschalteten Zustand nicht zu groß wird, werden nahezu sämtliche Verbraucher in diesem Zustand ganz abgeschaltet oder in einen Standby-Modus geschaltet, siehe beispielsweise DE 10 2014 208 257 A1.

Nur wenige dedizierte, stromsparende Verbraucher bleiben aktiv. Diese warten auf Signale von außen, um das Kommunikationssystem per Kommunikation über die jeweilige Kommunikationsleitung aufzuwecken. Dabei werden die Teilnehmer aus einem Ruhemodus in einen normalen Modus versetzt und gegebenenfalls eine Spannungsversorgung für weitere Teilnehmer eingeschaltet.

Eine Aktivierung des Kommunikationssystems von außen erfolgt beispielsweise mittels einer drahtlosen Verbindung oder direkt mechanisch durch das Betätigen eines Schalters. Die dedizierten, stromsparenden Verbraucher nutzen entweder eine Anbindung an eine externe oder an eine interne Energiequelle. Besitzen solche Verbraucher eine interne Energiequelle, so muss diese von Zeit zu Zeit aufgeladen oder erneuert werden.

Es ist ein Problem solcher Kommunikationssysteme, dass solche dedizierten, stromsparende Verbraucher, welche dazu geeignet sind das Kommunikationssystem aus dem Ruhemodus aufzuwecken, stark begrenzt sind, da diese kontinuierlich Energie der Hauptenergiequelle verbrauchen.

### Offenbarung der Erfindung

Der erfindungsgemäße Teilnehmer für ein digitales Kommunikationssystem, über das ein erstes logisches Signal und ein zweites logisches Signal übertragen werden, umfasst eine Aktivierungsschaltung, umfassend eine Versorgungseinheit, eine Schalteinheit, eine Sendeeinheit und eine Kommunikationsschnittstelle, wobei die Versorgungseinheit dazu eingerichtet ist, eine interne Versorgungsspannung bereitzustellen, die Schalteinheit dazu eingerichtet ist, die Versorgungseinheit mit der Sendeeinheit zu koppeln, um die Sendeeinheit mit der internen Versorgungsspannung zu versorgen, und die Sendeeinheit dazu eingerichtet ist in Reaktion auf eine Versorgung mit der internen Versorgungsspannung durch die Versorgungseinheit ein Aufwecksignal an der Kommunikationsschnittstelle auszugeben, welches zumindest das erste logische Signal umfasst, und im Anschluss auf das Ausgeben des Aufwecksignals kontinuierlich das zweite logische Signal an der Kommunikationsschnittstelle auszugeben, bis die Sendeeinheit durch die Schalteinheit von der Versorgungseinheit getrennt wird.

Mit anderen Worten ist die Aktivierungsschaltung des Teilnehmers ausschließlich dazu geeignet, das Aufwecksignal eines beliebigen Empfängers in dem Kommunikationssystem auszusenden, insbesondere auf eine Kommunikationsleitung auszugeben. Nachdem das Aufwecksignal ausgesandt wurde, erfolgt keine weitere Aktion durch den Teilnehmer. Erst wenn die Sendeeinheit durch die Schalteinheit von der Versorgungseinheit getrennt wurde und erneut mit der Versorgungseinheit gekoppelt wird, so wird erneut das Aufwecksignal ausgesandt. Die Aktivierungseinheit ist nicht dazu geeignet, Kommunikationssignale zu empfangen und zu verarbeiten. Der Teilnehmer ist dazu eingerichtet, in Reaktion auf ein Aktivierungssignal die Versorgungseinheit mit der Sendeeinheit zu koppeln, um daraufhin das Wecksignal auszugeben. Im Weiteren erfolgt keinerlei Kommunikation in dem digitalen Kommunikationssystem durch den Teilnehmer, bis die Versorgungseinheit erneut mit der Sendeeinheit gekoppelt wird. Das Aufwecksignal ist ein Signalmuster. Dieses Signalmuster kann auf einen bestimmten Empfänger angepasst sein, um diesen bestimmten Empfänger in dem Kommunikationssystem aufzuwecken, also in einen aktiven Zustand zu versetzen.

Das digitale Kommunikationssystem ist bevorzugt ein leitungsgebundenes Kommunikationssystem, bevorzugt ein Kommunikationsbus, beispielsweise ein CAN-Bus, oder ein Flexray-Bus. Weitere beispielhafte Kommunikationssysteme sind ein LAN-Netzwerk, insbesondere ein Ethernet Netzwerk, ein LIN-Netzwerk, ein MOST-Bus oder ein Sensornetzwerk oder Sensorbus, beispielsweise ein PSI5-Bus. Das digitale Kommunikationssystem ist bevorzugt leitungsgebunden, da in solchen Kommunikationssystemen aufgrund des geringen Abschlusswiderstandes viel Energie benötigt wird. Weiter bevorzugt ist das digitale Kommunikationssystem ein lokales Netzwerk (LAN). Die Kommunikationsschnittstelle ist eine Schnittstelle, beispielsweise ein Treiber, zu einem Übertragungsmedium des Kommunikationssystems, beispielsweise zu einer Übertragungsleitung, insbesondere zu einem Kommunikationsbus. Das Aufwecksignal ist ein Signal, welches dazu geeignet ist, weitere Teilnehmer des Kommunikationssystems zu aktivieren. Ein solches Aufwecksignal ist typischerweise in einem Standard definiert, der das Kommunikationssystem definiert. Das erste logische Signal ist insbesondere ein High-Signal. Das zweite logische Signal ist insbesondere ein Low-Signal. Das zweite logische Signal entspricht beispielsweise einem Signal, welches von einem beliebigen Teilnehmer des digitalen Kommunikationssystem ausgegeben wird, wenn dieser nicht mit einer Betriebsspannung versorgt wird. Das erste logische Signal und das zweite logische Signal stellen somit die beiden Signallevel bei einer digitalen Kommunikation über das Kommunikationssystem dar.

Der erfindungsgemäße Teilnehmer zeichnet sich dadurch aus, dass dieser nur einen sehr geringen Stromverbrauch aufweist, was dazu führt, dass dieser sehr kompakt ist und sehr kostengünstig hergestellt werden kann. Der Teilnehmer ist somit in der Lage, sehr energiesparend und einfach ein Bussystem aufzuwecken. In zahlreichen Kommunikationsnetzwerken ist der niedrige Wellenwiderstand einer Kommunikationsleitung, welcher beispielsweise bei einem kleinen Bus typischerweise zwischen 60 und 120 Ohm liegt, ein Problem. Dieser macht einen kleinen Energiespeicher quasi unmöglich, da ein Teilnehmer des Kommunikationssystems somit konstant mit minimaler Energie getrieben werden muss. Die Erfindung stützt sich auf eine Wake-Up-Funktion von Kommunikationssystemen, die von wenigen Spannungsimpulsen ausgelöst werden kann und allein damit das gesamte System aufwecken und einschalten kann.

Die Unteransprüche zeigen bevorzugte Weiterbildungen der Erfindung.

Bevorzugt umfasst der Teilnehmer eine Kommunikationseinheit, die dazu eingerichtet ist, mit dem Kommunikationssystem gekoppelt zu werden, und dazu eingerichtet ist, in dem Kommunikationssystem das erste logische Signal und das zweite logische Signale zu senden und zu empfangen. Der Teilnehmer weist somit neben der Aktivierungsschaltung eine Kommunikationseinheit auf, wobei die Kommunikationseinheit dazu geeignet ist, Daten in dem digitalen Kommunikationssystem zu Senden und zu Empfangen. Dies erfolgt über das entsprechende Kommunikationsmedium des Kommunikationssystems. Auf diese Weise wird ein Teilnehmer geschaffen, der in vollen Umfang an einer Kommunikation in dem Kommunikationssystem teilhaben kann.

Es ist vorteilhaft, wenn die Kommunikationseinheit einen Versorgungseingang aufweist und dazu eingerichtet ist, über den Versorgungseingang mit einer zentralen Versorgungsspannung versorgt zu werden. Auf diese Weise kann die Kommunikationseinheit des Teilnehmers, welche sich durch einen höheren Energiebedarf auszeichnet als die Aktivierungsschaltung, mittels einer externen Versorgungsspannung versorgt werden, die beispielsweise immer dann zur Verfügung steht, wenn das Kommunikationssystem sich nicht in dem Ruhemodus befindet, also beispielsweise nachdem dieses durch die Aktivierungsschaltung aufgeweckt wurde. Der Teilnehmer kann somit besonders kompakt ausgeführt sein, da kein interner Energiespeicher für die Kommunikationseinheit benötigt wird.

Ferner ist es vorteilhaft, wenn die Sendeeinheit zumindest einen Komparator und einen Kondensator umfasst, die zu einem Timer verschaltet sind, um das erste logische Signal in dem Aufwecksignal entsprechend einer vorgegebenen Zeitdauer zu erzeugen. Das Aufwecksignal kann somit auf besonders einfache Weise erzeugt werden, ohne dass ein Speicher oder Prozessor benötigt wird. Eine solche Sendeeinheit, und somit auch der Teilnehmer, ist besonders energiesparend.

Bevorzugt umfasst die Versorgungseinheit ein Peltier-Element und/oder eine Solarzelle umfasst. Somit wird sichergestellt, dass der Teilnehmer auch nach langer Inaktivität dazu in der Lage ist, das Kommunikationssystem aufzuwecken.

Weiter bevorzugt umfasst die Versorgungseinheit einen Energiepuffer, der insbesondere mittels eines lokalen Energiespeichers, insbesondere einer Knopfzelle, mittels eines Peltier-Elementes und/oder mittels einer Solarzelle geladen wird. Es wird somit ermöglicht, dass der Energiepuffer, insbesondere ein Kondensator, über einen längeren Zeitraum hinweg geladen wird, um dann eine ausreichende interne Versorgungsspannung für die Aktivierungsschaltung bereitzustellen. Dadurch wird es ermöglicht, dass die notwendige Solarzelle oder das notwendige Peltier-Element besonders kompakt ausgeführt werden kann, bzw. sehr flexibel angeordnet werden kann. Der Energiepuffer umfasst bevorzugt einen Keramikvielschicht-Chipkondensator (MLCC), welcher sich durch seine kompakte Bauart auszeichnet und zugleich ein zu schnelles Entladen einer Energiequelle der Versorgungseinheit verhindert. Ein Energiespeicher ist ein lokaler Energiespeicher, wenn dieser in den Teilnehmer integriert ist, also beispielsweise zusammen mit der Versorgungseinheit in einem gemeinsamen Gehäuse verbaut ist.

Auch ist es vorteilhaft, wenn die Sendeeinheit dazu eingerichtet ist, entweder ein erstes Signalmuster oder ein zweites Signalmuster als Aufwecksignal an der Kommunikationsschnittstelle auszugeben. Eine Auswahl, ob das erste Signalmuster oder das zweite Signalmuster als Aufwecksignal ausgegeben wird, erfolgt bevorzugt basierend auf einer Anwendereingabe oder mittels einer Selektion durch ein Steuersignal. Damit wird es ermöglicht, gemäß der Auswahl gezielt unterschiedliche Teilnehmer in dem Kommunikationssystem aufzuwecken. Alternativ ist die Sendeeinheit dazu eingerichtet, eine beliebige Anzahl unterschiedlicher Signalmuster in Folge oder gemäß einer Auswahl auszugeben.

Ebenfalls vorteilhaft ist ein Kommunikationssystem, umfassend den Teilnehmer, eine Kommunikationsleitung und einen ersten weiteren Teilnehmer. Der erste weitere Teilnehmer ist insbesondere dazu eingerichtet, Daten in dem digitalen Kommunikationssystem zu senden und zu empfangen. Ein solches Kommunikationssystem weist die Vorteile des Teilnehmers auf.

Bevorzugt sind der Teilnehmer und der erste weitere Teilnehmer über die Kommunikationsleitung verbunden und der erste weitere Teilnehmer ist dazu eingerichtet, von einem inaktiven in einen aktiven Modus zu schalten, wenn dieser das Aufwecksignal über die Kommunikationsleitung empfängt. Der erste weitere Teilnehmer ist somit ein Teilnehmer, der durch das Aufwecksignal aus einem Standby-Modus in einen normalen Modus versetzt werden kann. In einem solchen Kommunikationssystem kann der erste weitere Teilnehmer auf besonders einfache Weise durch den Teilnehmer in den normalen Modus versetzt werden. Somit ist es insbesondere möglich, den ersten weiteren Teilnehmer derart auszuführen, dass dieser nicht in der Lage ist, das Aufwecksignal auszusenden, wodurch dieser erste weitere Teilnehmer und somit das Kommunikationssystem besonders kostengünstig ausgeführt werden kann.

Bevorzugt umfasst das Kommunikationssystem eine zentrale Spannungsquelle, welche dazu eingerichtet ist, eine zentrale Versorgungspannung bereitzustellen, wobei der erste weitere Teilnehmer mit der zentrale Spannungsquelle gekoppelt ist, um in dem aktiven Modus und in dem inaktiven Modus von der zentralen Spannungsquelle mit der zentralen Versorgungspannung versorgt zu werden. Somit ist der erste weitere Teilnehmer zu jeder Zeit mit der zentralen Spannungsquelle gekoppelt. Somit steht dem ersten weiteren Teilnehmer jederzeit ausreichend Energie zur Verfügung, damit dieser in Folge eines Aufweckens durch den Teilnehmer in dem normalen Modus betrieben werden kann.

Weiter bevorzugt umfasst das Kommunikationssystem ein Schaltterminal, wobei der erste weitere Teilnehmer dazu eingerichtet ist, das Schaltterminal in einen Zustand zu Schalten, in dem ein Versorgungseingang des Teilnehmers und/oder ein Versorgungseingang eines zweiten weiteren Teilnehmers von der zentralen Spannungsquelle mit der zentralen Versorgungspannung versorgt wird. Auf diese Weise können solche zweiten weiteren Teilnehmer von einem Ruhezustand, insbesondere einem abgeschalteten Zustand, in einen normalen Modus versetzt werden, die nicht über eine entsprechende Funktion verfügen, die ein Aufwecken über das Kommunikationsmedium des digitalen Kommunikationssystems ermöglicht. In entsprechender Weise wird es ebenfalls ermöglicht, die Kommunikationseinheit des Teilnehmers in einen aktiven Modus zu schalten, wenn das Kommunikationssystem aufgeweckt wird.

### Kurze Beschreibung der Zeichnung(en)

Nachfolgend werden Ausführungsbeispiele der Erfindung unter Bezugnahme auf die begleitende Zeichnung im Detail beschrieben. In der Zeichnung ist:
- Figur 1: ein beispielhafter Teilnehmer eines Kommunikationssystems gemäß einer ersten Ausführungsform der Erfindung,
- Figur 2: ein beispielhafter Teilnehmer eines Kommunikationssystems gemäß einer zweiten Ausführungsform der Erfindung,
- Figur 3: ein beispielhafter Teilnehmer eines Kommunikationssystems gemäß einer dritten Ausführungsform der Erfindung,
- Figur 4: ein Schaltbild einer beispielhaften Aktivierungsschaltung des beispielhaften Teilnehmers eines Kommunikationssystems, und
- Figur 5: ein beispielhaftes erfindungsgemäßes Kommunikationssystem gemäß einer Ausführungsform der Erfindung, und
- Figur 6: Diagramme, welche ein beispielhaftes Aufwecksignal darstellen.

### Ausführungsformen der Erfindung

Im Folgenden wird die Erfindung mittels eines CAN-Bussystems beschrieben. Erfindungsgemäß kann das digitale Kommunikationssystem jedoch auch ein beliebiges anderes Kommunikationssystem sein, und ist insbesondere nicht auf Bus-Systeme beschränkt. So kann das Kommunikationssystem ebenfalls eine Netz-Struktur aufweisen. Beispielhafte weitere Kommunikationssysteme sind ein LAN-Netzwerk, insbesondere ein Ethernet Netzwerk, ein Flexray-Bus, ein LIN-Netzwerk oder ein MOST-Bus. So können erfindungsgemäß insbesondere auch sogenannte Power-Over-Ethernet Geräte aktiviert werden.

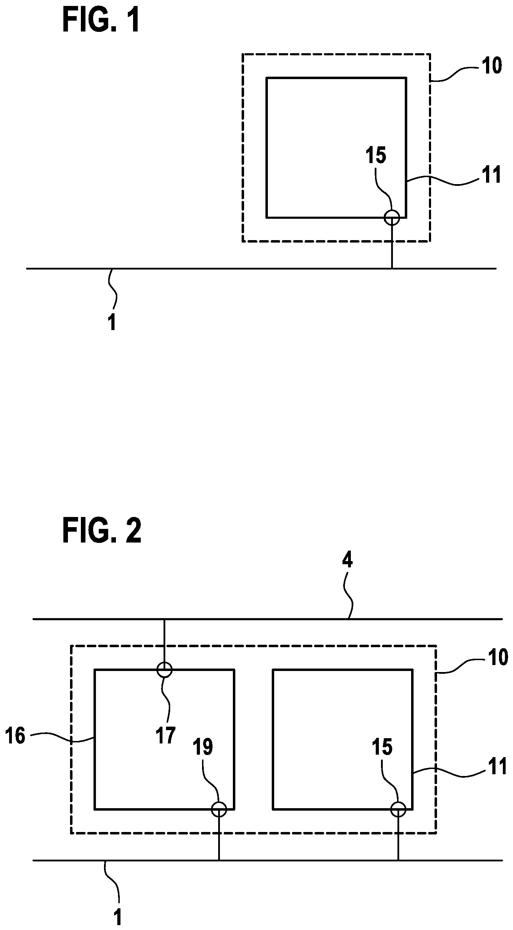

Figur 1 zeigt einen beispielhaften erfindungsgemäßen Teilnehmer 10 eines Kommunikationssystems 100 gemäß einer ersten Ausführungsform der Erfindung. Das Kommunikationssystem 100 ist ein CAN- Bussystem. Über das digitale Kommunikationssystem 100 werden ein erstes logisches Signal und ein zweites logisches Signal übertragen. Das erste logische Signal ist dabei ein High-Signal, welches auch als dominantes CAN-Signal bezeichnet wird. Das zweite logische Signal ist dabei ein Low-Signal, welches auch als rezessives CAN-Signal bezeichnet wird.

Der Teilnehmer 10 ist ein CAN-Busteilnehmer. Der Teilnehmer 10 umfasst eine Aktivierungsschaltung 11.

Die Aktivierungsschaltung 11 ist dazu eingerichtet, ein Aufwecksignal zu erzeugen.
Die Aktivierungsschaltung 11 umfasst eine Versorgungseinheit 12, eine Schalteinheit 13, eine Sendeeinheit 14 und eine Kommunikationsschnittstelle 15.

Die Kommunikationsschnittstelle 15 ist dazu geeignet, die Aktivierungsschaltung 11 mit einer Kommunikationsleitung 1 des Kommunikationssystems 100 zu koppeln. Die Kommunikationsleitung 1 ist in dieser Ausführungsform die Busleitung des CAN-Bussystems. Wird das Aufwecksignal von der Aktivierungsschaltung 11 erzeugt, so wird das auf Wecksignal auf die Kommunikationsleitung 1 ausgegeben und wird somit von weiteren Teilnehmern, die mit der Kommunikationsleitung 1 gekoppelt sind, empfangen.

Die Versorgungseinheit 12 ist dazu eingerichtet, eine interne Versorgungsspannung bereitzustellen. Die Schalteinheit 13 ist dazu eingerichtet, die Versorgungseinheit 12 mit der Sendeeinheit 14 zu koppeln, um die Sendeeinheit mit der internen Versorgungsspannung zu versorgen. Dies erfolgt in Reaktion auf eine Anwenderanforderung. Die Anwenderanforderung ist in dieser Ausführungsform ein betätigen eines Schalters an dem Teilnehmer 10. Wird die Anwenderanforderung an dem Teilnehmer 10 erkannt, so wird die Versorgungseinheit 12 mit der Sendeeinheit 14 gekoppelt und die Sendeeinheit 14 wird somit von der Versorgungseinheit 12 mit der internen Versorgungsspannung versorgt, welche für einen Betrieb der Sendeeinheit 14 notwendig ist.

Die Sendeeinheit 14 ist dazu eingerichtet, in Reaktion auf eine Versorgung mit der internen Versorgungsspannung durch die Versorgungseinheit 12 und somit auch in Reaktion auf die Anwenderanforderung, das Aufwecksignal über die Kommunikationsschnittstelle 15 auszugeben. Wird die Sendeeinheit 14 nicht mit der internen Versorgungsspannung versorgt, so gibt diese kein Signal an der Kommunikationsschnittstelle 15 aus. Das Aufwecksignal ist in dieser Ausführungsform ein logisches High-Signal, welches eine vorgegebene Zeitdauer t_{wake} überschreitet.

Die Sendeeinheit 14 ist ferner dazu eingerichtet, im Anschluss an das Ausgeben des Aufwecksignals kontinuierlich das zweite logische Signal über die Kommunikationsschnittstelle 15 auszugeben, bis die Sendeeinheit 14 durch die Schalteinheit 13 von der Versorgungseinheit 12 getrennt wird. Das zweite logische Signal ist das LOW-Signal. Da das LOW-Signal das rezessive CAN-Signal ist, bedeutet dies, dass die Sendeeinheit 14 im Anschluss auf das Ausgeben des Aufwecksignals kontinuierlich kein Signal über die Kommunikationsschnittstelle 15 ausgibt. Die Sendeeinheit 14 wird somit inaktiv, wodurch keinerlei weitere Energie der Versorgungseinheit 12 verbraucht wird.

Figur 2 zeigt einen Teilnehmer 10 gemäß einer zweiten Ausführungsform der Erfindung. Da die Aktivierungsschaltung 11 nicht dazu geeignet ist, außer dem Aufwecksignal Daten zu senden oder sogar Daten über die Kommunikationsleitung 1 zu empfangen, weist der Teilnehmer 10 gemäß der zweiten Ausführungsform eine Kommunikationseinheit 16 auf, welche diese Funktion übernimmt. Die Kommunikationseinheit 16 entspricht einem herkömmlichen CAN-Busteilnehmer, der dazu geeignet ist, über einen CAN-Bus zu kommunizieren.

Die Kommunikationseinheit 16 ist dazu eingerichtet, mit dem Kommunikationssystem 1 gekoppelt zu werden. Dazu weist die Kommunikationseinheit 16 beispielsweise einen Stecker auf, der dazu geeignet ist, mit der Kommunikationsleitung 1 verbunden zu werden. In dem in Figur 2 gezeigten beispielhaften Teilnehmer 10 sind die Kommunikationseinheit 16 und die Aktivierungsschaltung 11 über jeweils eine Kommunikationsschnittstelle 15, 19 mit der Kommunikationsleitung 1 verbunden. Dazu weist die Aktivierungsschaltung 11 die Kommunikationsschnittstelle 15 und die Kommunikationseinheit 16 eine weitere Kommunikationsschnittstelle 19 auf. Die Aktivierungsschaltung 11 und die Kommunikationseinheit 16 umfassen mit der jeweiligen Kommunikationsschnittstelle 15, 19 somit jeweils einen zugehörigen Treiber, der für den jeweiligen Typus des Kommunikationssystems 100, hier ein CAN-Bussystem, geeignet ist.

Da die Kommunikationseinheit 16 dazu geeignet ist, Daten über die Kommunikationsleitung 1 zu Senden und Daten über die Kommunikationsleitung 1 zu Empfangen, ist diese dazu eingerichtet, in dem Kommunikationssystem 100 das erste logische Signal und das zweite logische Signale zu senden und zu empfangen.

Die Kommunikationseinheit 16 weist einen Versorgungseingang 17 auf, und ist dazu eingerichtet ist, über den Versorgungseingang 17 mit einer zentralen Versorgungsspannung versorgt zu werden. Dazu ist beispielsweise eine Versorgungsleitung 4 an den Versorgungseingang 17 angesteckt. Die Kommunikationseinheit 16 wird somit nicht über die Versorgungseinheit 12 versorgt.

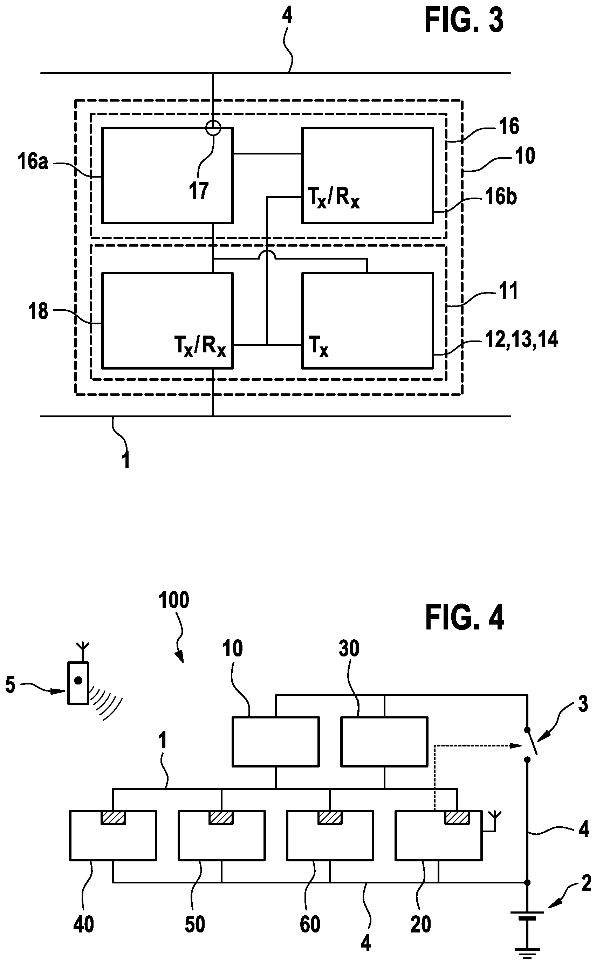

Figur 3 zeigt einen Teilnehmer 10 gemäß einer dritten Ausführungsform der Erfindung. Dieser entspricht im Wesentlichen der zweiten Ausführungsform der Erfindung, jedoch teilen sich die Aktivierungsschaltung 11 und die Kommunikationseinheit 16 die Kommunikationsschnittstelle 15 der Aktivierungsschaltung 11. Dabei ist es unerheblich, ob die Kommunikationsschnittstelle 15 der Aktivierungsschaltung 11 oder der Kommunikationseinheit 16 zugehörig ist, so lange diese dazu geeignet ist, sowohl Daten über die Kommunikationsleitung 1 zu senden als auch Daten über die Kommunikationsleitung 1 zu empfangen.

Der Teilnehmer 10 umfasst in dieser dritten Ausführungsform ebenfalls die Kommunikationseinheit 16 und die Aktivierungsschaltung 11. Die Versorgungseinheit 12, die Schalteinheit 13 und die Sendeeinheit 14 der Aktivierungsschaltung 11 sind in den Figuren 1 und 2 als ein gemeinsamer Block dargestellt.

Die Kommunikationseinheit 16 umfasst dabei eine Spannungsversorgung 16a und einen Mikrocontroller 16b. Die Spannungsversorgung 16a umfasst den Versorgungseingang 17 und stellt eine Betriebsspannung für den Mikrocontroller 16b bereit. Der Mikrocontroller 16b ist dazu geeignet, Signale an die Kommunikationsschnittstelle 15 zu Senden und Signale von der Kommunikationsschnittstelle 15 zu empfangen. Eine entsprechende Schnittstelle des Mikrocontroller 16b ist daher in Figur 3 mit Tx/Rx (Transmit/Receive) gekennzeichnet.

Die Spannungsversorgung 16a ist ebenfalls mit der Kommunikationsschnittstelle 15 verbunden, um diese mit einer benötigten Betriebsspannung zu versorgen. Dies erfolgt jedoch nur dann, wenn die Spannungsversorgung 16a über die Versorgungsleitung 4 ihrerseits mit Spannung versorgt wird.

Ferner ist die Kommunikationsschnittstelle 15 mit der Versorgungseinheit 12 der Aktivierungsschaltung 11 verbunden. Wird die Spannungsversorgung 16a nicht über die Versorgungsleitung 4 mit Spannung versorgt, beispielsweise weil das Kommunikationssystem 100 inaktiv ist, so wird die Kommunikationsschnittstelle 15 von der Versorgungseinheit 12 der Aktivierungsschaltung 11 mit der notwendigen Betriebsspannung versorgt. Dies erfolgt jedoch nur dann, wenn das Aufwecksignal ausgesendet wird. Optional wird ein Energiespeicher der Versorgungseinheit 12 über die Spannungsversorgung 16a aufgeladen, wenn die Spannungsversorgung 16a über die Versorgungsleitung 4 mit Spannung versorgt wird.

Die Sendeeinheit 14 gibt in Reaktion auf eine Versorgung mit der internen Versorgungsspannung durch die Versorgungseinheit 12 das Aufwecksignal an der Kommunikationsschnittstelle 15 aus. Da die Sendeeinheit 14 im Folgenden das zweite logische Signal an die Kommunikationsschnittstelle 15 ausgibt, bis die Sendeeinheit 14 durch die Schalteinheit 13 von der Versorgungseinheit 12 getrennt wird, muss diese nicht dazu geeignet sein, Signale von der Kommunikationsschnittstelle 15 zu empfangen. Ein entsprechender Ausgang der Sendeeinheit 14, welcher mit der Kommunikationsschnittstelle 15 verbunden ist, ist daher in Figur 3 mit Tx (Transmit) gekennzeichnet.

Figur 4 zeigt ein Schaltbild einer beispielhaften Aktivierungsschaltung 11 des Teilnehmers 10 des Kommunikationssystems 100. Figur 4 zeigt dabei die Versorgungseinheit 12, die Schalteinheit 13, die Sendeeinheit 14 und die Kommunikationsschnittstelle 15.

Die Versorgungseinheit 12 weist einen ersten Widerstand R1, einen ersten Kondensator C1, einen zweiten Kondensator C2, einen dritten Kondensator C3 und einen vierten Kondensator C4 auf. Der erste Widerstand R1 weist einen ersten Anschluss und einen zweiten Anschluss auf. Der zweite bis vierte Kondensator C2, C3, C4 sind dabei optional. Ein jeweils erster Anschluss des ersten bis vierten Kondensators C1 bis C4 ist mit dem zweiten Anschluss des ersten Widerstandes R1 verbunden. Ein jeweils zweiter Anschluss des ersten bis vierten Kondensators C1 bis C4 ist mit einer Schaltungserde GND verbunden. Der zweite Anschluss des ersten Widerstandes R1 ist ferner mit einem Ausgang A1 der Versorgungseinheit 12 verbunden. Der erste Anschluss des ersten Widerstandes R1 ist mit einer Energiequelle Q1 der Versorgungseinheit 12, beispielsweise einem Pol einer Knopfzelle verbunden. Alternativ oder zusätzlich ist der erste Anschluss des ersten Widerstandes R1 mit einem Peltier-Element und/oder eine Solarzelle verbunden. Der erste bis vierte Kondensator C1 bis C4 wird somit über den ersten Widerstand R1 aufgeladen. Eine Kombination des ersten bis vierten Kondensators C1 bis C4 bildet somit einen Energiepuffer, der mittels der Knopfzelle, des Peltier-Elementes und/oder der Solarzelle geladen wird. Der erste bis vierte Kondensator C1 bis C4 weisen jeweils eine Kapazität von 100µF auf. Der erste Widerstand R1 weist einen Widerstandswert von 5,9kOhm auf. Ist der erste bis vierte Kondensator C1 bis C4 aufgeladen, so liegt an dem Ausgang A1 der Versorgungseinheit 12 die interne Versorgungsspannung an.

Die Schalteinheit 13 weist einen ersten Schaltkontakt S1 und einen zweiten Schaltkontakt S2 auf. Der erste Schaltkontakt S1 ist mit einem Eingang E1 der Schalteinheit 13 verbunden. Der Eingang E1 der Schalteinheit 13 ist mit dem Ausgang A1 der Versorgungseinheit 12 gekoppelt. Der zweite Schaltkontakt S2 ist mit einem Ausgang A2 der Schalteinheit 13 verbunden. Der erste Schaltkontakt S1 und der zweite Schaltkontakt S2 ist über jeweils eine Suppressordiode Z1, Z2 mit der Schaltungserde GND verbunden, um Spannungsspitzen abzuleiten. Die beiden Suppressordioden Z1, Z2 sind optional. Wird der erste Schaltkontakt S1 mit dem zweiten Schaltkontakt S2 elektrisch leitend verbunden, so wird die an dem Eingang E1 der Schalteinheit 13 anliegende interne Versorgungsspannung zu dem Ausgang A2 der Schalteinheit 13 durchgeschaltet. Um den ersten Schaltkontakt S1 mit dem zweiten Schaltkontakt S2 elektrisch leitend zu verbinden, ist beispielsweise ein Schalter zwischen diesen angeordnet. Dieser Schalter kann entweder unmittelbar von einem Anwender betätigt werden, wenn ein aufwecken des Kommunikationssystems 100 gewünscht ist, oder kann mittels einer weiteren Schaltung betätigt werden, beispielsweise mittels einer Empfängerschaltung, die durch eine Fernbedienung gesteuert wird.

Die Sendeeinheit 14 weist einen Spannungseingang E3 auf. Dieser Spannungseingang E3 ist mit dem Ausgang A2 der Schalteinheit 13 gekoppelt. Dabei ist optional zwischen dem Spannungseingang E3 der Sendeeinheit 14 und dem Ausgang A2 der Schalteinheit 13 ein Spannungsregler angeordnet, der es ermöglicht, dass die von der Versorgungseinheit 12 bereitgestellte interne Versorgungsspannung auf die Anforderungen der Sendeeinheit 14 angepasst wird.

Die Sendeeinheit 14 weist einen ersten Komparator K1 und einen zweiten Komparator K2 auf. Die Sendeeinheit 14 weist ferner einen zweiten bis neunten Widerstand R1 bis R9, einen fünften bis achten Kondensator C5 bis C8 und einen Transistor T1 auf. Ferner weist die Sendeeinheit 14 eine erste Diode D1 und eine zweite Diode D2 auf. Der erste Komparator K1 weist einen ersten Eingang 1IN-, einen zweiten Eingang 1IN+ sowie einen Ausgang 1OUT auf. Der zweite Komparator K2 weist ebenfalls einen ersten Eingang 2IN-, einen zweiten Eingang 2IN+ sowie einen Ausgang 2OUT auf.

Der zweite Widerstand R2 weist einen Widerstandswert von 147kOhm auf. Der dritte und vierte Widerstand R3 und R4 weisen einen Widerstandswert von 100kOhm auf. Der fünfte und sechste Kondensator C5 und C6 weisen einen Kapazitätswert von 10nF auf. Der fünfte und neunte Widerstand R5 und R9 weisen einen Widerstandswert von 10kOhm auf. Der sechste und siebte Widerstand R6 und R7 weisen einen Widerstandswert von 100kOhm auf. Der siebte und achte Kondensator C7 und C8 weisen ein Kapazitätswert von 1nF auf. Der achte Widerstand R8 weist einen Widerstandswert von 46,4kOhm auf.

Ein erster Anschluss des zweiten Widerstandes R2 ist mit dem Spannungseingang E3 der Sendeeinheit 14 verbunden. Ein zweiter Anschluss des zweiten Widerstandes R2 ist mit dem ersten Eingang 1IN- des ersten Komparators K1 verbunden. Ein erster Anschluss des fünften Kondensators C5 ist mit der Schaltungserde GND verbunden. Ein zweiter Anschluss des fünften Kondensators C5 ist mit dem ersten Eingang 1IN- des ersten Komparators K1 verbunden. Ein erster Anschluss des dritten Widerstandes R3 ist mit dem Spannungseingang E3 der Sendeeinheit 14 verbunden. Ein zweiter Anschluss des dritten Widerstandes R3 ist mit dem zweiten Eingang 1IN+ des ersten Komparators K1 verbunden. Ein erster Anschluss des sechsten Kondensators C6 ist mit der Schaltungserde GND verbunden. Ein zweiter Anschluss des sechsten Kondensators C6 ist mit dem ersten Eingang 1IN- des ersten Komparators K1 verbunden. Der sechste Kondensator C6 ist optional und ist dazu geeignet, eine Verzögerungszeit einzustellen, welche verstreicht, bevor der erste Komparators K1 schaltet. Ein erster Anschluss des vierten Widerstandes R4 ist mit der Schaltungserde GND verbunden. Ein zweiter Anschluss des vierten Widerstandes R4 ist mit dem ersten Eingang 1IN- des ersten Komparators K1 verbunden.

Der Ausgang 1OUT des ersten Komparators K1 ist über den fünften Widerstand R5 mit dem Spannungseingang E3 der Sendeeinheit 14 verbunden. Der Ausgang 1OUT des ersten Komparators K1 ist über den siebten Kondensator C7 mit ersten Eingang 2IN- des zweiten Komparators K2 verbunden. Der erste Eingang 2IN- des zweiten Komparators K2 ist jeweils über den sechsten Widerstand R6 und den siebten Widerstand R7 mit der Schaltungserde GND verbunden. Ferner ist der erste Eingang 2IN- des zweiten Komparators K2 mit einer Katode der ersten Diode D1 verbunden. Eine Anode der ersten Diode D1 ist mit der Schaltungserde GND verbunden.

Der zweite Eingang 2IN+ des zweiten Komparators K2 ist über den achten Widerstand R8 mit der Schaltungserde GND verbunden. Der Ausgang 2OUT des zweiten Komparators K2 ist über den neunten Widerstand R9 mit dem Spannungseingang E3 der Sendeeinheit 14 verbunden. Der Ausgang 2OUT des zweiten Komparators K2 ist ferner mit einem Gate-Kontakt des Transistors T1 verbunden. Der Ausgang 2OUT des zweiten Komparators K2 ist über den achten Kondensator C8 mit seinem zweiten Eingang 2IN+ gekoppelt. Der zweite Eingang 2IN+ des zweiten Komparators K2 ist mit einer Katode der zweiten Diode D2 verbunden. Eine Anode der zweiten Diode D2 ist mit der Schaltungserde GND verbunden. Ein Source-Kontakt des Transistors T1 ist mit der Schaltungserde GND verbunden. Ein Drain-Kontakt des Transistors T1 ist mit der Kommunikationsschnittstelle 15 verbunden.

Die Kommunikationsschnittstelle 15 wird in dieser Ausführungsform von der Sendeeinheit 14 umfasst. Die Kommunikationsschnittstelle 15 ist dieser Ausführungsform ein CAN-Treiber. Das von dem ersten Transistor T1 an die Kommunikationsschnittstelle 15 ausgegebene Signal entspricht nicht den Anforderungen an ein Signal auf dem CAN-Bus, also auf der Kommunikationsleitung 1, da durch den Transistor T1 lediglich ein Spannungsniveau an der Kommunikationsschnittstelle auf das Spannungsniveau der Schaltungserde GND gezogen wird. Daher wird dieses Signal von der Kommunikationsschnittstelle 15 entsprechend umgesetzt und an die Anforderungen des CAN-Bus angepasst.

Wird die interne Versorgungsspannung über die Schalteinheit 13 an dem Spannungseingang E3 der Sendeeinheit 14 angelegt, so wird ein Ausgangssignal an dem Ausgang 1OUT des ersten Komparators K1 nach Ablauf einer definierten Zeit seine Polarität ändern. Die definierte Zeit ist durch die Wahl der dem ersten Komparator K1 vorgeschalteten Komponenten definiert. Dies führt dazu, dass in der Folge an dem Ausgang 2OUT des zweiten Komparators K2 ein Ausgangssignal ausgegeben wird, durch welches der erste Transistor T1 geschaltet wird. Da der Ausgang 2OUT des zweiten Komparators K2 über den achten Kondensator C8 mit dessen zweiten Eingang 2IN+ gekoppelt ist, wird der Transistor T1 jedoch nur für eine beschränkte Zeit durchgeschaltet. Es wird somit eine Impulsfolge generiert. Die Komparatoren K1 und K2 sind somit derart mit den Kondensatoren der Sendeeinheit 14 verschaltet, dass diese zusammen einen Timer bilden. In der Folge wird das erste logische Signal in dem Wecksignal entsprechend einer vorgegebenen Zeitdauer erzeugt, die sich aus den Kapazitätswerten der verwendeten Kondensatoren ergibt.

Die in Figur 4 gezeigte Sendeeinheit 14 lässt sich in drei Segmente 14a, 14b, 14c unterteilen. In einem ersten Segment 14a wird eine zeitliche Verzögerung erzeugt, nachdem die Sendeeinheit 14 durch die Versorgungseinheit 12 mit der Versorgungsspannung versorgt wird. In einem zweiten Segment 14b wird anschließend ein Impuls, auch Single Shot Pulse genannt, mit einer vordefinierten zeitlichen Dauer erzeugt. Dieser Impuls wird dem dritten Segment 14c bereitgestellt, welches eine Sendesteuerung, auch TXD-Control genannt, ist und die Kommunikationsschnittstelle 15 dazu ansteuert, ein entsprechendes Signal an die Kommunikationsleitung 1 auszugeben.

In einer alternativen Ausführungsform der Erfindung, welche im Wesentlichen der ersten, zweiten oder dritten Ausführungsform entspricht, ist die Sendeeinheit 14 dazu eingerichtet ist, entweder ein erstes Signalmuster oder ein zweites Signalmuster als Aufwecksignal an der Kommunikationsschnittstelle 15 auszugeben. Dazu ist in einer entsprechenden die Aktivierungsschaltung 11 das erste bis dritte Segment 14a bis 14c jeweils doppelt ausgeführt, wobei die Kondensatoren bei dem doppelten erste bis dritte Segment unterschiedlich dem ersten bis dritten Segment 14a bis 14c der ersten bis dritten Ausführungsform gewählt sind. Mit anderen Worten umfasst die Sendeeinheit 14 eine erste und eine zweite Sendeeinheit. Abhängig von einer Anwendereingabe wird entweder die erste oder die zweite Sendeeinheit durch die Versorgungseinheit 12 mit der Versorgungsspannung versorgt. Die erste und zweite Sendeeinheit erzeugen Aufwecksignale mit unterschiedlichen Signalmustern. Auf diese Weise können, abhängig davon, welche der Sendeeinheiten durch die Versorgungseinheit 12 mit der Versorgungsspannung versorgt wird, unterschiedliche Teilnehmer des Kommunikationssystems 20, 30, 40, 50, 60 aufgeweckt werden.

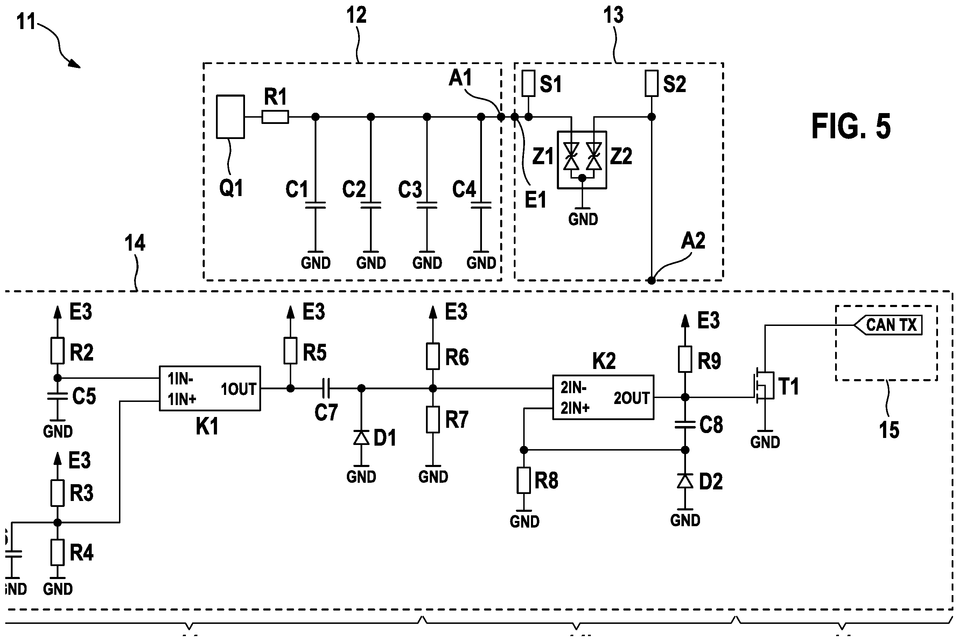

Figur 5 zeigt ein beispielhaftes erfindungsgemäßes Kommunikationssystem gemäß einer Ausführungsform der Erfindung. Dieses umfasst den Teilnehmer 10, die Kommunikationsleitung 1 und einen ersten weiteren Teilnehmer 20. Ferner umfasst das Kommunikationssystem 100 einen zweiten weiteren Teilnehmer 30, einen dritten weiteren Teilnehmer 40, einen vierten weiteren Teilnehmer 50 und einen fünften weiteren Teilnehmer 60. Das Kommunikationssystem umfasst ferner eine zentrale Spannungsquelle, die durch eine Batterie 2 gebildet wird. Der Teilnehmer 10 sowie der erste bis fünfte weitere Teilnehmer 20, 30, 40, 50,60, sind über die Kommunikationsleitung 1 des Kommunikationssystems 100 miteinander verbunden. Alternativ ist die zentrale Spannungsquelle ein Stromnetzwerk, beispielsweise ein 110V oder 220V Netzwerk.

Ferner umfasst das Kommunikationssystem 100 eine Versorgungsleitung 4. Der erste, der dritte, der vierte und der fünfte weitere Teilnehmer 20 , 40, 50, 60 sind über die Versorgungsleitung 4 mit der Batterie 2 verbunden und werden kontinuierlich von dieser mit einer zentralen Versorgungsspannung versorgt. Der zweite weitere Teilnehmer 30 sowie der Teilnehmer 10 sind ebenfalls mit der Versorgungsleitung 4 verbunden, wobei zwischen dem Teilnehmer 10 und der Batterie 2 und somit auch zwischen dem zweiten weiteren Teilnehmer 30 und der Batterie 2 ein Schaltterminal 3 in der Versorgungsleitung 4 angeordnet ist, wodurch der Teilnehmer 10 und der zweite weitere Teilnehmer 30 von der zentralen Versorgungsspannung getrennt werden können.

Die Versorgungsleitung 4 ist mit dem Teilnehmer 10 verbunden. Dabei wird in dieser Ausführungsform jedoch lediglich die Kommunikationseinheit 16 mit der zentralen Versorgungsspannung der Batterie 2 versorgt. Optional wird der Energiepuffer der Versorgungseinheit 12 mittels der von der Batterie 2 bereitgestellten zentralen Versorgungsspannung geladen.

Der erste weitere Teilnehmer 20, sowie der dritte, der vierte und der fünfte weitere Teilnehmer 40, 50, 60 sind dazu eingerichtet, von einem inaktiven in einen aktiven Modus zu schalten, wenn der jeweilige Teilnehmer das Aufwecksignal über die Kommunikationsleitung 1 empfängt. Der zweite weitere Teilnehmer 30 verfügt nicht über diese Funktion.

Ist das Kommunikationssystem 100 in einem Ruhemodus, so ist das Schaltterminal 3 ist in einem geöffneten Zustand und der erste weitere Teilnehmer 20, sowie der dritte, der vierte und der fünfte weitere Teilnehmer 40, 50, 60 sind in dem inaktiven Modus.

Wird nun von dem Teilnehmer 10 das Aufwecksignal auf der Kommunikationsleitung 1 ausgegeben, so wird dieses Aufwecksignal von dem ersten weiteren Teilnehmer 20, sowie von dem dritten, dem vierten und dem fünften weiteren Teilnehmer 40, 50, 60 empfangen und diese schalten von dem inaktiven Modus in den aktiven Modus, wobei diese weiterhin von der Batterie 2 für deren Betrieb mit der zentralen Versorgungsspannung versorgt werden.

Der zweite weitere Teilnehmer 30 sowie die Kommunikationseinheit 16 in dem Teilnehmer 10 bleiben zunächst inaktiv, da diese von der zentralen Versorgungsspannung getrennt sind und nicht mit der zum Betrieb benötigten zentralen Versorgungsspannung versorgt werden. Der erste weitere Teilnehmer 20 ist dazu eingerichtet, das Schaltterminal 3 in einen Zustand zu schalten, in dem ein Versorgungseingang 17 des Teilnehmers 10 und ein Versorgungseingang des zweiten weiteren Teilnehmers 30 von der zentralen Spannungsquelle, also von der Batterie 2, mit der zentralen Versorgungsspannung versorgt wird. Dies erfolgt, indem der erste weitere Teilnehmer 20 das Schaltterminal 3 schließt. Der zweite weitere Teilnehmer 30 sowie die Kommunikationseinheit 16 in dem Teilnehmer 10 werden nunmehr von der Batterie 2 mit der zentralen Versorgungsspannung versorgt und sind somit eingeschaltet, werden also aktiv. In der Folge sind somit alle Teilnehmer 10, 20, 30, 40, 50, 60 des Kommunikationssystems 100 aktiv und bereit für die jeweilige Verwendung. Das Kommunikationssystem 100 ist somit aus dem Ruhemodus erwacht.

Es wird darauf hingewiesen, dass, auch wenn das Kommunikationssystem 100 durch den Teilnehmer 10 aus dem Ruhemodus aufgeweckt, also in einen aktiven Zustand versetzt werden kann, dies nicht ausschließt, dass das Kommunikationssystem 100 auch mittels andere Teilnehmer, beispielsweise dem ersten weiteren Teilnehmer 20 aufgeweckt werden kann. So ist der erste weitere Teilnehmer 20 in dieser Ausführungsform mittels einer Fernsteuerung 5 aktivierbar. Wird der erste weitere Teilnehmer 20 mittels der Fernsteuerung 5 aktiviert, so sendet dieser das Aufwecksignal über die Kommunikationsleitung 1 und schließt den Schaltterminal 3. In der Folge sind somit ebenfalls alle Teilnehmer des Kommunikationssystems 100 aktiv und bereit für die jeweilige Verwendung. Der Teilnehmer 10 ist somit mit herkömmlichen Kommunikationssystemen kompatibel.

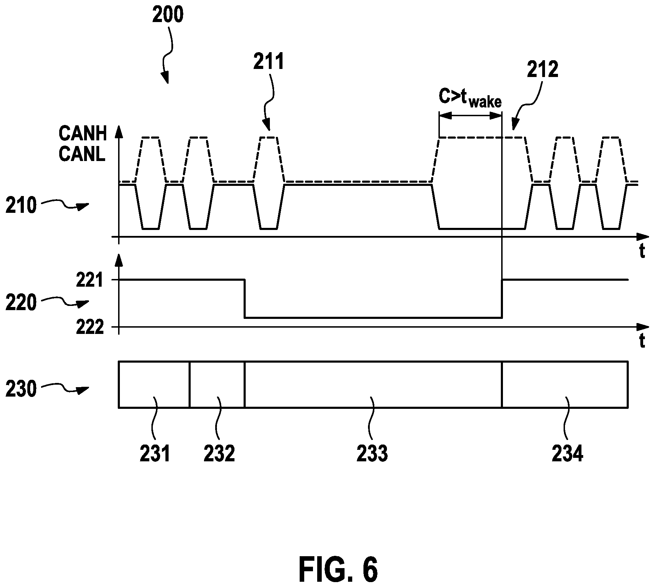

Figur 6 zeigt Diagramme, welche ein beispielhaftes Aufwecksignal darstellen. Ein erstes Diagramm 210 zeigt erste und zweite logische Signale auf einem CAN-Bus. Dabei liegt das erste logische Signal vor, wenn das CANH-Signal ungleich dem CANL-Signal ist, also das dominante CAN-Signal vorliegt. Das zweite logische Signal liegt vor, wenn das CANH-Signal gleich dem CANL-Signal ist, also das rezessive CAN-Signal vorliegt. Ein CANH-Signal ist dabei ein Spannungspegel auf einer ersten Ader des CAN-Bus und das CANL-Signal ist dabei ein Spannungspegel auf einer zweiten Ader des CAN-Bus. Ein zweites Diagramm 220 zeigt, in welchem Zeitraum das Kommunikationssystem 100 in dem Ruhemodus ist. So zeigt ein oberer Zustand 221 des Grafen an, dass das Kommunikationssystem 100 aktiv ist und ein unterer Zustand 222 des Grafen zeigt an, dass das Kommunikationssystem 100 in dem Ruhezustand ist. Ein drittes Diagramm 230 zeigt unterschiedliche Zustände, in denen sich das Kommunikationssystem befindet. Das erste bis dritte Diagramm 210, 220, 230 bilden einen identischen Zeitraum ab.

In einem ersten Zeitraum 231 befindet sich das Kommunikationssystem 100 in einem normalen Betrieb. Es werden unterschiedliche Signale über die Kommunikationsleitung 1 gesendet. In einem zweiten Zeitraum 232 wird ein Ruhekommando an alle Teilnehmer des Kommunikationssystems 100 gesendet. Das Kommunikationssystem 100 begibt sich in Folge darauf in den Ruhemodus, in dem es sich in einem dritten Zeitraum 233 befindet. Tritt auf der Kommunikationsleitung 1 noch ein Signal 211 auf, so bleibt das Kommunikationssystem 100 in dem Schlafmodus, wenn dieses Signal 211 nicht dem Aufwecksignal entspricht. Tritt das Aufwecksignal auf der Kommunikationsleitung 1 auf, beispielsweise in Form eines dominanten Signals 212, welches länger als eine vorgegebene Zeitdauer t_{wake} andauert, so geht das Kommunikationssystem 100 in den aktiven Modus über.

In anderen Ausführungsformen der Erfindung kann das Aufwecksignal jedoch eine beliebige andere Signalform aufweisen, kann beispielsweise eine beliebige Signalfolge aus dem ersten und zweiten logischen Signal sein.

In den beschriebenen Ausführungsformen muss das auf Wecksignal beispielsweise mindestens 5µs lang mindestens 1,15V differentielle Spannung zwischen CANH und CANL aufweisen, damit die Teilnehmer des Kommunikationssystems 100 dieses als Aufwecksignal interpretieren. Zwei in Serie geschaltete Knopfzellen bieten einen idealen Spannungslevel für handelsübliche 5-Volt CAN-Transceiver. Ein solcher CAN-Transceiver kann beispielsweise als Treiber der Aktivierungsschaltung 11 verwendet werden. Die große Stromtragfähigkeit zum Treiben der 60-120 Ohm Wellenwiderstand des CAN-Bus wird durch die Kondensatoren der Versorgungseinheit 12 gepuffert, da Knopfzellen nur eine sehr geringe maximale Stromentnahme bei gleichzeitig hoher Kapazität bieten. Die Kondensatoren der Versorgungseinheit 12 sind insbesondere Keramikkondensatoren, insbesondere Keramikvielschicht-Chipkondensatoren (MLCC). Diese bieten den einzigartigen Vorteil, dass deren Serienwiderstand nicht zur schnellen Entladung der beiden Knopfzellen führt. Die Ausdauer der Energieversorgung kann durch eine kleine Solarzelle stark vergrößert werden.

Erfindungsgemäß wird somit durch eine maximal reduzierte Energieversorgung und mit einer speziellen, aber einfachen Schaltung ein Aufwecksignal, auch Wake-Up Pattern genannt, ausgesendet, dass zum Aufwecken des Kommunikationssystems 100 ausreicht. Die Aktivierungsschaltung selbst kann durch Impulsfolge vom Kommunikationssystem 100 identifiziert werden. In Kombination mit sogenannten Energy-Harvesting als Energiequelle der Versorgungseinheit 12, beispielsweise mittels des Peltier-Elementes oder mittels der Solarzelle, die den Energiepuffer mit geringer Leistung sehr lange aufladen dessen Ladung aufrecht erhalten können, kann die Energieversorgung optimiert und maximiert werden.

Neben der obigen schriftlichen Offenbarung wird explizit auf die Offenbarung der Figuren 1 bis 6 verwiesen.

## Patentansprüche

1. Teilnehmer (10) für ein digitales Kommunikationssystem (100), über das ein erstes logisches Signal und ein zweites logisches Signal übertragen werden, umfassend:
eine Aktivierungsschaltung (11), umfassend eine Versorgungseinheit (12), eine Schalteinheit (13), eine Sendeeinheit (14) und eine Kommunikationsschnittstelle (15); wobei
die Versorgungseinheit (12) dazu eingerichtet ist, eine interne Versorgungsspannung bereitzustellen,
die Schalteinheit (13) dazu eingerichtet ist, die Versorgungseinheit (12) mit der Sendeeinheit (14) zu koppeln, um die Sendeeinheit mit der internen Versorgungsspannung zu versorgen, und
die Sendeeinheit (14) dazu eingerichtet ist
in Reaktion auf eine Versorgung mit der internen Versorgungsspannung durch die Versorgungseinheit (12) ein Aufwecksignal an der Kommunikationsschnittstelle (15) auszugeben, welches zumindest das erste logische Signal umfasst, und
im Anschluss auf das Ausgeben des Aufwecksignals kontinuierlich das zweite logische Signal an der Kommunikationsschnittstelle (15) auszugeben, bis die Sendeeinheit (14) durch die Schalteinheit (13) von der Versorgungseinheit (12) getrennt wird.

2. Teilnehmer (10) gemäß Anspruch 1, **dadurch gekennzeichnet, dass** der Teilnehmer (10) ferner eine Kommunikationseinheit (16) umfasst, die dazu eingerichtet ist, mit dem Kommunikationssystem (1) gekoppelt zu werden, und dazu eingerichtet ist, in dem Kommunikationssystem das erste logische Signal und das zweite logische Signale zu senden und zu empfangen.

3. Teilnehmer (10) gemäß Anspruch 2, **dadurch gekennzeichnet, dass** die Kommunikationseinheit (16) einen Versorgungseingang (17) aufweist und dazu eingerichtet ist, über den Versorgungseingang (17) mit einer zentralen Versorgungsspannung versorgt zu werden.

4. Teilnehmer (10) gemäß einem der voranstehenden Ansprüche, **dadurch gekennzeichnet, dass** die Sendeeinheit (14) zumindest einen Komparator und einen Kondensator umfasst, die zu einem Timer verschaltet sind, um das erste logische Signal in dem Aufwecksignal entsprechend einer vorgegebenen Zeitdauer zu erzeugen.

5. Teilnehmer (1) gemäß einem der voranstehenden Ansprüche, **dadurch gekennzeichnet, dass** die Versorgungseinheit (12) einen lokalen Energiespeicher, insbesondere eine Knopfzelle, ein Peltier-Element und/oder eine Solarzelle umfasst.

6. Teilnehmer (1) gemäß einem der voranstehenden Ansprüche, **dadurch gekennzeichnet, dass** die Versorgungseinheit (12) einen Energiepuffer umfasst, der insbesondere mittels einer Knopfzelle, mittels eines Peltier-Elementes und/oder mittels einer Solarzelle geladen wird.

7. Teilnehmer (1) gemäß einem der voranstehenden Ansprüche, **dadurch gekennzeichnet, dass** die Sendeeinheit (14) dazu eingerichtet ist, entweder ein erstes Signalmuster oder ein zweites Signalmuster als Aufwecksignal an der Kommunikationsschnittstelle (15) auszugeben.

8. Kommunikationssystem (100), umfassend einen Teilnehmer (10) gemäß einem der voranstehenden Ansprüche, eine Kommunikationsleitung (1) und einen ersten weiteren Teilnehmer (20).

9. Kommunikationssystem gemäß Anspruch 8, wobei der Teilnehmer (10) und der erste weitere Busteilnehmer (20) über die Kommunikationsleitung (1) verbunden sind und der erste weitere Teilnehmer (20) dazu eingerichtet ist, von einem inaktiven in einen aktiven Modus zu schalten, wenn dieser das Aufwecksignal über die Kommunikationsleitung (1) empfängt.

10. Kommunikationssystem gemäß einem der Ansprüche 8 oder 9, ferner umfassend eine zentrale Spannungsquelle (2), welche dazu eingerichtet ist, eine zentrale Versorgungspannung bereitzustellen, wobei der erste weitere Teilnehmer (20) mit der zentrale Spannungsquelle gekoppelt ist, um in dem aktiven Modus und in dem inaktiven Modus von der zentralen Spannungsquelle (2) mit der zentralen Versorgungspannung versorgt zu werden.

11. Kommunikationssystem gemäß einem der Ansprüche 8 bis 10, ferner umfassend ein Schaltterminal (3), wobei der erste weitere Teilnehmer (20) dazu eingerichtet ist, das Schaltterminal (3) in einen Zustand zu Schalten, in dem ein Versorgungseingang (17) des Teilnehmers (10) und/oder ein Versorgungseingang eines zweiten weiteren Teilnehmers (30) von der zentralen Spannungsquelle (2) mit der zentralen Versorgungspannung versorgt wird.

## Claims

1. Participating entity (10) for a digital communication system (100) via which a first logical signal and a second logical signal are transmitted, comprising:
an activation circuit (11) comprising a supply unit (12), a switching unit (13), a transmitting unit (14) and a communication interface (15); wherein
the supply unit (12) is configured to provide an internal supply voltage,
the switching unit (13) is configured to connect the supply unit (12) to the transmitting unit (14) in order to supply the transmitting unit with the internal supply voltage, and
the transmitting unit (14) is configured to output a wake-up signal on the communication interface (15) in response to a supply with the internal supply voltage by the supply unit (12), said wake-up signal comprising at least the first logical signal and,
following the output of the wake-up signal, to output the second logical signal continuously on the communication interface (15) until the transmitting unit (14) is disconnected from the supply unit (12) by the switching unit (13).

2. Participating entity (10) according to Claim 1, **characterized in that** the participating entity (10) further comprises a communication unit (16) which is configured to be connected to the communication system (1) and is configured to transmit and receive the first logical signal and the second logical signal in the communication system.

3. Participating entity (10) according to Claim 2, **characterized in that** the communication unit (16) has a supply input (17) and is configured to be supplied with a central supply voltage via the supply input (17).

4. Participating entity (10) according to one of the preceding claims, **characterized in that** the transmitting unit (14) comprises at least one comparator and one capacitor which are connected to form a timer in order to generate the first logical signal in the wake-up signal corresponding to a predefined time duration.

5. Participating entity (10) according to one of the preceding claims, **characterized in that** the supply unit (12) comprises a local energy store, in particular a button cell, a Peltier element and/or a solar cell.

6. Participating entity (10) according to one of the preceding claims, **characterized in that** the supply unit (12) comprises an energy buffer which is charged, in particular, by means of a button cell, by means of a Peltier element and/or by means of a solar cell.

7. Participating entity (10) according to one of the preceding claims, **characterized in that** the transmitting unit (14) is configured to output either a first signal pattern or a second signal pattern as a wake-up signal on the communication interface (15).

8. Communication system (100), comprising a participating entity (10) according to one of the preceding claims, a communication line (1) and a first further participating entity (20).

9. Communication system according to Claim 8, wherein the participating entity (10) and the first further bus participating entity (20) are connected via the communication line (1) and the first further participating entity (20) is configured to switch from an inactive to an active mode if it receives the wake-up signal via the communication line (1).

10. Communication system according to one of Claims 8 or 9, further comprising a central voltage source (2) which is configured to provide a central supply voltage, wherein the first further participating entity (20) is connected to the central supply voltage in order to be supplied with the central supply voltage by the central voltage source (2) in the active mode and in the inactive mode.

11. Communication system according to one of Claims 8 to 10, further comprising a switching terminal (3), wherein the first further participating entity (20) is configured to switch the switching terminal (3) to a state in which a supply input (17) of the participating entity (10) and/or a supply input of a second further participating entity (30) is supplied with the central supply voltage by the central voltage source (2).

## Revendications

1. Abonné (10) pour un système de communication numérique (100), par le biais duquel sont transmis un premier signal logique et un deuxième signal logique, comprenant :
un circuit d'activation (11), comprenant une unité d'alimentation (12), une unité de commutation (13), une unité d'émission (14) et une interface de communication (15) ;
l'unité d'alimentation (12) étant conçue pour fournir une tension d'alimentation interne,
l'unité de commutation (13) étant conçue pour connecter l'unité d'alimentation (12) avec l'unité d'émission (14) afin d'alimenter l'unité d'émission avec la tension d'alimentation interne, et
l'unité d'émission (14) étant conçue pour
en réaction à une alimentation avec la tension d'alimentation interne par l'unité d'alimentation (12), délivrer un signal de réveil à l'interface de communication (15), lequel comporte au moins le premier signal logique, et
après avoir délivré le signal de réveil, délivrer continuellement le deuxième signal logique à l'interface de communication (15) jusqu'à ce que l'unité d'émission (14) soit déconnectée de l'unité d'alimentation (12) par l'unité de commutation (13).

2. Abonné (10) selon la revendication 1, **caractérisé en ce que** l'abonné (10) comporte en outre une unité de communication (16) qui est conçue pour être connectée au système de communication (1) et qui est conçue pour envoyer et pour recevoir le premier signal logique et le deuxième signal logique dans le système de communication.

3. Abonné (10) selon la revendication 2, **caractérisé en ce que** l'unité de communication (16) possède une entrée d'alimentation (17) et est conçue pour être alimentée avec une tension d'alimentation centrale par le biais de l'entrée d'alimentation (17).

4. Abonné (10) selon l'une des revendications précédentes, **caractérisé en ce que** l'unité d'émission (14) comporte au moins un comparateur et un condensateur, qui sont interconnectés en un temporisateur afin de générer le premier signal logique dans le signal de réveil conformément à une durée prédéfinie.

5. Abonné (1) selon l'une des revendications précédentes, **caractérisé en ce que** l'unité d'alimentation (12) comporte un accumulateur d'énergie local, notamment une pile bouton, un élément de Peltier et/ou une cellule solaire.

6. Abonné (1) selon l'une des revendications précédentes, **caractérisé en ce que** l'unité d'alimentation (12) comporte un tampon d'énergie, lequel est notamment chargé au moyen d'une pile bouton, au moyen d'un élément de Peltier et/ou au moyen d'une cellule solaire.

7. Abonné (1) selon l'une des revendications précédentes, **caractérisé en ce que** l'unité d'émission (14) est conçue pour délivrer soit un premier modèle de signal, soit un deuxième modèle de signal en tant que signal de réveil à l'interface de communication (15).

8. Système de communication (100), comprenant un abonné (10) selon l'une des revendications précédentes, une ligne de communication (1) et un premier abonné supplémentaire (20).

9. Système de communication selon la revendication 8, l'abonné (10) et le premier abonné au bus supplémentaire (20) étant reliés par le biais de la ligne de communication (1) et le premier abonné supplémentaire (20) étant conçu pour commuter d'un mode inactif en un mode actif lorsque celui-ci reçoit le signal de réveil par le biais de la ligne de communication (1).

10. Système de communication selon l'une des revendications 8 et 9, comprenant en outre une source de tension centrale (2) qui est conçue pour fournir une tension d'alimentation centrale, le premier abonné supplémentaire (20) étant connecté à la source de tension centrale afin d'être alimenté avec la tension d'alimentation centrale par la source de tension centrale (2) dans le mode actif et dans le mode inactif.

11. Système de communication selon l'une des revendications 8 à 10, comprenant en outre un terminal de commutation (3), le premier abonné supplémentaire (20) étant conçu pour commuter le terminal de commutation (3) dans un état dans lequel une entrée d'alimentation (17) de l'abonné (10) et/ou une entrée d'alimentation d'un deuxième abonné supplémentaire (30) est alimentée avec la tension d'alimentation centrale par la source de tension centrale (2).
